# EUROPÄISCHE PATENTSCHRIFT

(11) **EP 2 159 080 B1**
(45) Veröffentlichungstag und Bekanntmachung des Hinweises auf die Patenterteilung: **18.05.2011**
(21) Anmeldenummer: 09162533.5
(22) Anmeldetag: 12.06.2009
(51) Int. Cl.: B60C 11/03, B60C 11/12

(54) **Fahrzeugluftreifen**
Pneumatic tire
Pneumatique

(30) Priorität: 29.08.2008 DE 102008044921
(43) Veröffentlichungstag der Anmeldung: 03.03.2010
(73) Patentinhaber: Continental Reifen Deutschland GmbH, 30165 Hannover (DE)
(72) Erfinder: Celik, Akif, 30173, Hannover (DE); Wiese, Klaus, 30559, Hannover (DE); Heine, Stefan, 30163, Hannover (DE)
(74) Vertreter: Finger, Karsten

(56) Entgegenhaltungen:
- EP-A- 1 207 057
- EP-A- 1 207 058
- DE-A1- 4 222 614
- JP-A- 5 077 613

## Beschreibung

Die Erfindung betrifft einen Fahrzeugluftreifen mit einem Laufstreifen, welcher durch in Umfangsrichtung umlaufende Umfangsnuten und durch Quernuten in Profilelemente, insbesondere Profilblöcke gegliedert ist, wobei Profilblöcke vorgesehen sind, welche parallel zueinander und zumindest im Wesentlichen in Profilquerrichtung verlaufende Lochreihen aufweisen.

Ein derartiger gattungsgemäßer Fahrzeugluftreifen ist aus der EP-B-1 207 057 bekannt. Dieser, insbesondere für die Antriebsachse von Lastkraftwagen vorgesehene Fahrzeugluftreifen ist mit einem laufrichtungsgebunden ausgeführten Laufstreifen versehen, welcher sich aus Profilblockreihen zusammensetzt. Es sind Blöcke vorgesehen, deren Blockkante, die beim Abrollen des Reifens zuerst in den Untergrund eintritt, einen Steigungswinkel von maximal 5° aufweist, wobei diese Blöcke mit einer Vielzahl von Löchern bzw. Vertiefungen versehen sind, die derart in radialer Richtung verlaufen, dass sie einen Winkel von mindestens 10° mit der radialen Richtung einschließen. Die Vertiefungen weisen mittlere Querschnittsflächen von 0,2 mm² bis 12 mm² sowie runde Formen auf. Ein derart ausgeführter Laufstreifen soll einen möglichst gleichmäßigen Abrieb aufweisen.

Es ist ferner bekannt, Laufstreifen in Fahrzeugluftreifen mit Löchern zu versehen, die als Wasserablaufkanäle dienen. So ist beispielsweise aus der EP-B- 10 33 267 ein Fahrzeugluftreifen bekannt, bei welchem die Wasserablaufkanäle im Laufstreifen innerhalb des Profilblocks ausgebildete längliche Einschnitte sind. Bei anderen bekannten Ausführungsvarianten von Laufstreifen mit Löchern bzw. Lochreihen sind diese innerhalb von in Umfangsrichtung umlaufenden Reihen angeordnet, beispielsweise bei dem aus der EP-A- 1 541 380 bekannten und asymmetrisch ausgeführten Laufstreifen.

Es ist bekannt und üblich, Laufstreifen von PKW-Reifen, die für den Einsatz unter winterlichen Fahrbedingungen oder für den Ganzjahreseinsatz geeignet sein sollen, mit einer Vielzahl von Einschnitten zu versehen, um die Griffeigenschaften auf winterlichen Fahrbahnen, insbesondere auf Schnee und Eis, zu verbessern. Sowohl die Umfangs- als auch die Quersteifigkeit der Profilelemente wird mit zunehmender Anzahl von Einschnitten geringer. Dadurch reduziert sich der Widerstand der Profilelemente gegen von außen wirkende Kräfte, etwa beim Bremsen. Dies hat einen erhöhten Abrieb des Laufstreifens und verschlechterte Bremseigenschaften des Reifens auf trockenen Fahrbahnen zur Folge.

Der Erfindung liegt die Aufgabe zugrunde, diesen Zielkonflikt - Verbesserung der Eis- und Schneeperformance auf der einen Seite und eine hohe Profilelementsteifigkeit zur Gewährleistung guter Trockenfahreigenschaften auf der anderen Seite - zu entschärfen. Es ist daher Aufgabe der Erfindung, bei einem Reifen der eingangs genannten Art sowohl die Schnee- und Eisperformance als auch die Trockeneigenschaften, insbesondere was das Bremsen auf trockenen Fahrbahnen und den Trockenabrieb betrifft, zu verbessern.

Gelöst wird die gestellte Aufgabe erfindungsgemäß dadurch, dass pro Profilblock zwei oder drei gleichmäßig verteilte Lochreihen vorgesehen sind, wobei die Löcher innerhalb einer Lochreihe variierende Lochflächen aufweisen.

Bei einem erfindungsgemäß ausgeführten Laufstreifen sind daher in Profilblöcken wenige Lochreihen angeordnet, deren Löcher unterschiedlich große Lochflächen aufweisen. Derart ausgeführte und angeordnete Löcher haben in Abhängigkeit von der Größe ihrer Lochflächen die Fähigkeit, als "Schneetaschen" auf winterlichen Fahrbahnen Schnee aufzunehmen, wodurch die Schnee- Schnee-Reibung verbessert wird. Auf trockenen Fahrbahnen nehmen die Löcher bei von außen auf den Laufstreifen einwirkenden Kräften Einfluss auf die Blocksteifigkeit - sowohl in Umfangs- als auch in Querrichtung. Beispielsweise bewirkt das "Schließen" der Löcher beim Bremsen eine Erhöhung der Umfangssteifigkeit, sodass beim Bremsvorgang einer nachteiligen Deformation des Profilblockes Widerstand entgegensetzt ist.

Bei einer bevorzugten Ausführungsform der Erfindung ist jeweils im mittleren Teil des Profilblockes zwischen zwei benachbarten Lochreihen in Erstreckungsrichtung der Lochreihen verlaufend ein Einschnitt angeordnet. Solche Einschnitte gestatten eine zusätzliche Beeinflussung der Winter-Performance des Reifens und - je nach Ausführung der Einschnitte - auch gezielt eine zusätzliche Beeinflussung der Blocksteifigkeit.

Für die erwünschte Wirkung der Löcher ist es von Vorteil, wenn die Größen ihrer Lochflächen in einem bestimmten Bereich variieren. Die innerhalb einer Lochreihe verlaufenden Löcher sollten Lochflächen zwischen 1,9 mm² und 14 mm², vorzugsweise zwischen 3,8 mm² und 6,3 mm², aufweisen.

Um bestimmte Blockbereiche, beispielsweise die Randbereiche der Profilblöcke, gezielt mehr oder weniger zu versteifen als andere Profilblockbereiche, ist es von Vorteil, wenn zumindest ein Teil der Löcher in einer Lochreihe eine schrittweise größer bzw. kleiner werdende Lochfläche aufweist. Besonders vorteilhaft ist es in diesem Zusammenhang, wenn die Lochflächen von Loch zu Loch um einen Faktor größer werden, welcher zwischen 0,5 und 2,0 beträgt.

Eine weitere Maßnahme, eine gezielte Beeinflussung der Steifigkeit bestimmter Profilblockbereiche zu erzielen, besteht darin, dass die Lochabstände zwischen den Löchern einer Lochreihe variiert werden, wobei der gegenseitige Abstand der Löcher innerhalb einer Lochreihe zumindest 2 mm betragen sollte.

Insbesondere in Profilblöcken, welche in Schulterblockreihen verlaufen, ist es vorteilhaft, wenn die Lochabstände zwischen den Löchern einer Lochreihe in Richtung zum benachbarten Laufstreifenrand schrittweise größer sind.

Ein zu großer Abstand zwischen den Löchern innerhalb einer Lochreihe sollte, um die erwünschte Wirkung der Löcher sicherzustellen, vermieden werden. Optimal ist es, wenn der Lochabstand von Loch zu Loch jeweils um einen Faktor, welcher zwischen 1,05 und 1,5 beträgt, größer ist.

Auch der Tiefe der einzelnen Löcher kommt im Zusammenhang mit ihrer eingangs beschriebenen Wirkung eine gewisse Bedeutung zu. Grundsätzlich sollten die Löcher eine Mindesttiefe von 1 mm aufweisen und höchstens bis auf Profiltiefe reichen. Bei kreisrund ausgeführten Löchern sollte das Verhältnis des Lochdurchmessers zur Lochtiefe für jedes Loch innerhalb einer Lochreihe zwischen 2 und 5 betragen. Für eine besonders vorteilhafte Beeinflussung der Blocksteifigkeit kann bei kreisrund ausgeführten Löchern das Verhältnis des Lochdurchmessers zur Lochtiefe für jedes Loch innerhalb einer Lochreihe zumindest im wesentlichen konstant sein.

Die Winterperformance und Trockeneigenschaften des Reifens lassen sich zusätzlich durch die Ausgestaltung der Einschnitte zwischen den Lochreihen beeinflussen. In diesem Zusammenhang ist es von Vorteil, wenn diese Einschnitte zumindest über einen Teil ihrer Erstreckung einen treppen-, wellen- oder zick-zack-förmigen Verlauf aufweisen. In schulterseitigen Blockreihen ist es besonders vorteilhaft, wenn der bzw. die Einschnitt(e) aus einem Einschnittteil mit einem treppenförmigen Verlauf und einem Einschnittteil mit einem wellenförmigen Verlauf besteht bzw. bestehen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung einer Ausführungsvariante eines Laufstreifens und
Fig. 2 ein Detail des Laufstreifens - einen Schulterblock- in vergrößerter Darstellung.

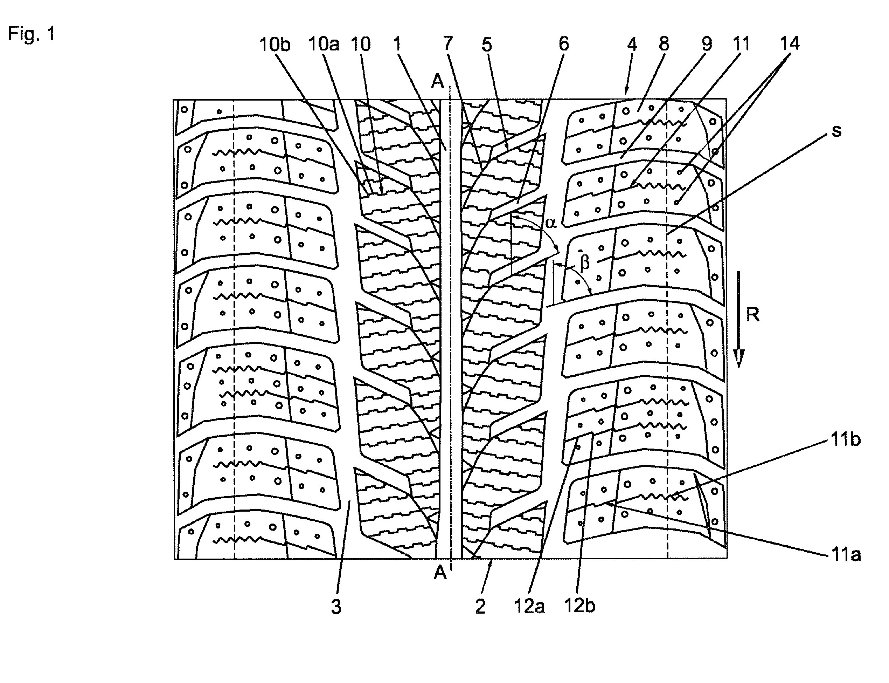

Fig. 1 zeigt eine Teilabwicklung eines Laufstreifens eines Fahrzeugluftreifens für Personenkraftwagen. Die gestrichelten Linien s verdeutlichen die seitlichen Ränder des bodenberührenden Bereichs des Laufstreifens. Der beispielhaft dargestellte Laufstreifen ist laufrichtungsgebunden ausgeführt, der Reifen ist daher mit einer bevorzugten Abrollrichtung (Pfeil R) am Fahrzeug zu montieren. Der Laufstreifen weist eine entlang des Reifenäquators A-A umlaufende, gerade ausgeführte und breite Umfangsnut 1 auf , an welche beidseitig Profilblockreihen 2 anschließen, die durch weitere, breit ausgeführte Umfangsnuten 3 von schulterseitig verlaufenden Blockreihen 4 getrennt sind. Die Profilblöcke 5 in jeder Profilblockreihe 2 sind voneinander jeweils durch eine sacknutartig endende Quernut 6 getrennt. Die Quernuten 6 in der einen Blockreihe 2 sind zu jener in der anderen Blockreihe 2 gegensinnig geneigt, wobei der Winkel α, den die Quernuten 6 mit der Reifenumfangsrichtung einschließen, in der Größenordnung von 45° bis 80° beträgt. An den geschlossenen Enden der Quernuten 6 schließen Einschnitte 7 an, welche bis zur zentralen Umfangsnut 1 verlaufen. Die Einschnitte 7 weisen eine Breite in der Größenordnung von 0,5 mm bis 1 mm auf und schließen mit der Reifenumfangsrichtung einen kleineren Winkel ein als die Quernuten 6.

Jede Schulterblockreihe 4 setzt sich aus Blöcken 8 zusammen, die in jeder Blockreihe 4 voneinander durch Quernuten 9 getrennt sind. Die Quernuten 9 schließen mit der Umfangsrichtung des Reifens einen Winkel β ein, wobei β ≥ α ist. Die Quernuten 9 können, wie dargestellt, in ihrem Verlauf jeweils einen Knick aufweisen, sodass die Größe des Winkels β über den Verlauf der Quernuten 9 variiert. Alternativ dazu können die Quernuten 9 auch so gestaltet sein, dass der Winkel β über ihren Verlauf konstant bleibt oder kontinuierlich größer wird. Durch den Verlauf der Quernuten 6 und der Quernuten 9 entsteht, über die Laufstreifenbreite betrachtet, ein üblicherweise als gepfeilt bezeichnetes Profil mit V-förmig verlaufenden Quernuten 6, 9.

Bei der dargestellten Ausführungsvariante weisen die Profilblöcke 5 in den Profilblockreihen 2 jeweils eine Vielzahl von Einschnitten 10 auf, welche eine Breite von 0,4 bis 0,6 mm besitzen, zumindest abschnittsweise bis auf die Profiltiefe reichen, sich im Wesentlichen in Reifenquerrichtung erstrecken und in jeder Profilblockreihe 2 zumindest im Wesentlichen parallel zueinander verlaufen. Der gegenseitige Abstand der Einschnitte 10 ist im Wesentlichen gleich groß. Über ihre Erstreckung sind die Einschnitte 10 in der Art einer Rechteckfunktion aufgeführt mit in Erstreckungsrichtung verlaufenden kurzen geraden Abschnitten 10a und mit diese etwa unter einem rechten Winkel verbindenden kürzeren Abschnitten 10b.

In den Schulterblöcken 8 der beiden Schulterblockreihen 4 ist in den Blöcken 8 mit geringerer Umfangslänge ein Einschnitt 11 angeordnet, in den Blöcken 8 mit größerer Umfangslänge sind zwei Einschnitte 11 angeordnet, wobei sich die Einschnitte 11 parallel zu den Quernuten 9 und damit auch parallel zu den die Quernuten 9 begrenzenden Blockkanten erstrecken. In Schulterblöcken 8 mit einem Einschnitt 11 ist dieser etwa mittig im Profilblock 8 angeordnet, in Schulterblöcken 8 mit zwei Einschnitten 11 weisen diese zueinander und zu den Profilblockkanten etwa gleich große Abstände auf. Jeder Einschnitt 11 setzt sich aus einem Einschnittteil 11 a, welcher an die Umfangsnut 3 anschließt und einen treppenförmigen Verlauf aufweist, und einem Einschnittteil 11b zusammen, welcher einen wellen- oder zickzackförmigen Verlauf aufweist. Der Einschnittteil 11b verläuft über den jeweiligen Laufstreifenrand s hinaus. Im treppenförmigen Teil 11a sind langgestreckte, gerade und im Wesentlichen in Erstreckungsrichtung verlaufende Abschnitte 12a vorgesehen, welche sich mit kurzen im rechten Winkeln zu den Abschnitten 12a verlaufenden Abschnitten 12b abwechseln. Die wellenförmigen Teile 11b der Einschnitte 11 weisen eine gleichmäßige Wellenform mit konstanter Amplitude und konstanter Wellenlänge auf. Es kann auch eine Wellenform mit variierender Amplitude und/oder variierender Wellenlänge vorgesehen sein.

In Kombination mit den beiden Einschnitten 11 bzw. mit dem einzigen Einschnitt 11 sind in jedem Schulterblock 8 Lochreihen 15 ausgebildet. In Schulterblöcken 8 mit einem Einschnitt 11 befinden sich zwei Reihen 15 von Löchern 14, jeweils eine Reihe 15 zwischen dem Einschnitt 11 und der jeweils benachbarten Quernut 9. In den Schulterblöcken 8, welche zwei Einschnitte 11 aufweisen, sind drei Reihen 15 von Löchern 14 angeordnet, eine Lochreihe 15 etwa mittig zwischen den beiden Einschnitten 11, die beiden weiteren Lochreihen 15 jeweils etwa mittig zwischen einem der Einschnitte 11 und der benachbarten Quernut 9. Bei der dargestellten Ausführungsvariante besteht jede Lochreihe 15 aus fünf Löchern 14, wobei sich jeweils vier dieser Löcher 14 innerhalb der Laufstreifenränder s befinden.

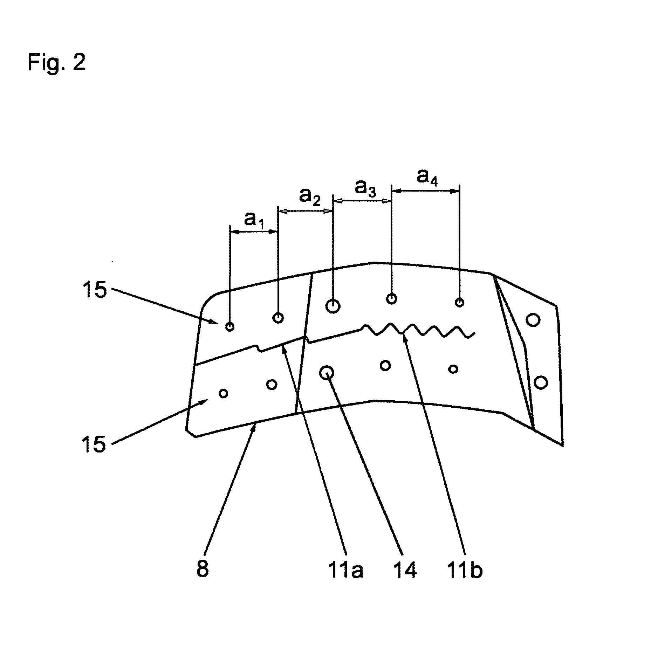

Die Löcher 14 sind in Draufsicht insbesondere rund, vorzugsweise kreisförmig (wie dargestellt) oder oval, ausgeführte, können jedoch auch eine andere Form, beispielsweise eine rechteckige, aufweisen. Die Löcher 14 erstrecken sich in radialer Richtung und behalten dabei ihre an der Blockoberfläche gegebene Form und Größe und weisen eine Mindesttiefe von 1 mm auf. Fig.1 und Fig. 2 zeigen eine bevorzugte Ausführung der Löcher 14 mit innerhalb der Lochreihen 15 variierenden Lochflächen. Wie dargestellt, können die Lochflächen der einzelnen Löcher 14 derart variiert werden, dass sich die Löcher 14 mit der kleinsten Lochfläche an den Enden der Lochreihen 15 befinden und in der Mitte der Lochreihe 15 das Loch 14 mit der größten Fläche vorgesehen ist. Dazwischen sind Löcher 14 vorgesehen, die eine Lochfläche aufweisen, die größer ist als die kleinste und kleiner ist als die größte. Das Loch 14 mit der kleinsten Fläche weist eine Fläche von mindestens 1,9 mm² auf, vorzugsweise mindestens 3,8 mm², wobei die Lochflächen der Löcher 14 bis zum Loch 14 mit der größten Fläche schrittweise größer wird. Das größte Loch weist eine Fläche von maximal 14 mm², vorzugsweise 6,3 mm², auf. Die Lochflächen werden von Loch 14 zu Loch 14 um einen Faktor F1 größer, welcher zwischen 0,5 und 2,0, bei einer bevorzugten Ausführung 1,3, beträgt. Eine etwaige Abnahme der Lochflächen von Löchern 14 innerhalb einer Lochreihe erfolgt analog.

Alternativ zu der gezeigten Ausführungsvariante kann auch vorgesehen sein, dass sämtliche Löcher 14 innerhalb einer Lochreihe 15 derart ausgeführt sind, dass ihre Flächen, wie beschrieben, schrittweise größer oder kleiner werden.

Die Lochabstände a₁ bis aₙ (a₁ bis a₄ in Fig. 2) zwischen den benachbarten Löchern 14 in einer Lochreihe 15 können übereinstimmen oder variieren. Bevorzugt werden die Lochabstände a₁ bis aₙ innerhalb einer Lochreihe 15 in Richtung Laufstreifenrand s schrittweise erhöht. Der kleinste Lochabstand a₁ ist vorzugsweise zwischen dem letzten, laufstreifeninnenseitig innerhalb einer Lochreihe 15 befindlichen Loch 14 und dem diesen benachbarten gegeben. Die Lochabstände a₂ bis aₙ zwischen den aufeinander folgenden Löchern 14 werden gegenüber dem jeweils vorherigen Lochabstand um einen Faktor F2 größer, welcher zwischen 1,05 und 1,50, bei einer bevorzugten Ausführungsform 1,15, beträgt. Der kleinste Lochabstand a₁ beträgt vorzugsweise 2 mm.

Die Lochtiefe kann für sämtliche Löcher 14 innerhalb einer Lochreihe 15 übereinstimmen, sie kann jedoch ebenfalls variiert werden. Bevorzugt erfolgt diese Variation derart, dass die Lochtiefe auf die Lochfläche abgestimmt wird, wobei größere Löcher vorzugsweise auch größere Tiefen aufweisen. Bei kreisrund ausgeführten Löchern werden die Lochdurchmesser zu den jeweiligen Lochtiefen in Beziehung gesetzt, wobei bei einer bevorzugten Ausführungsform das Verhältnis des Lochdurchmessers zur Lochtiefe für jedes Loch 14 innerhalb einer Lochreihe 15 zumindest im Wesentlichen konstant ist. Im Rahmen der Erfindung kann dieses Verhältnis zwischen 2 und 5 betragen, wobei die Tiefe mindestens 1 mm beträgt und höchsten der Profiltiefe entspricht.

Von besonderem Vorteil ist die Anordnung von Lochreihen 15 in den Schulterblöcken 8 eines Laufstreifens. Erfindungsgemäß ausgeführte und angeordnete Lochreihen 15 können jedoch auch an anderer Stelle im Laufstreifen, beispielsweise in mittleren Blockreihen, vorgesehen sein.

### Bezugsziffernliste

- 1: Umfangsnut
- 2: Blockreihen
- 3: Umfangsnut
- 4: Schulterblockreihe
- 5: Block
- 6: Quernut
- 7: Einschnitt
- 8: Block
- 9: Quernut
- 10: Einschnitt
- 10a: Abschnitt
- 10b: Abschnitt
- 11: Einschnitt
- 11a: Einschnittteil
- 11b: Einschnittteil
- 12a: Abschnitt
- 12b: Abschnitt
- 14: Loch
- 15: Lochreihe
- α: Winkel
- β: Winkel
- s: Laufstreifenrand
- a₁ - an: Lochabstand

## Patentansprüche

1. Fahrzeugluftreifen mit einem Laufstreifen, welcher durch in Umfangsrichtung umlaufende Umfangsnuten (1, 3) und durch Quernuten (6, 9) in Profilelemente, insbesondere Profilblöcke (5, 8), gegliedert ist, wobei Profilblöcke (9) vorgesehen sind, welche parallel zueinander und zumindest im Wesentlichen in Profilquerrichtung verlaufende Lochreihen (15) aufweisen, wobei
pro Profilblock (9) zwei oder drei gleichmäßig verteilte Lochreihen (15) vorgesehen sind, **dadurch gekennzeichnet, dass** die Löcher (14) innerhalb einer Lochreihe (15) variierende Lochflächen aufweisen.

2. Fahrzeugluftreifen nach Anspruch 1, **dadurch gekennzeichnet, dass** im mittleren Bereich des Profilblockes (9) zwischen zwei benachbarten Lochreihen (15) ein in Erstreckungsrichtung der Lochreihen (15) verlaufender Einschnitt (11) angeordnet ist.

3. Fahrzeugluftreifen nach Anspruch 1, **dadurch gekennzeichnet, dass** die Löcher (14) innerhalb einer Lochreihe Lochflächen (15) von 1,9 mm² bis 14 mm², vorzugsweise von 3,8 mm² bis 6,3 mm², aufweisen.

4. Fahrzeugluftreifen nach Anspruch 1 oder 3, **dadurch gekennzeichnet, dass** zumindest ein Teil der Löcher (14) in einer Lochreihe (15) eine schrittweise größer werdende Lochfläche aufweist.

5. Fahrzeugluftreifen nach einem der Ansprüche 1 bis 4, **dadurch gekennzeichnet, dass** die Lochflächen von Loch (14) zu Loch (14) um einen Faktor (F1) größer werden, welcher zwischen 0,5 und 2,0 beträgt.

6. Fahrzeugluftreifen nach einem der Ansprüche 1 bis 5, **dadurch gekennzeichnet, dass** die Lochabstände (a₁ bis aₙ) zwischen den Löchern (14) einer Lochreihe (15) variieren.

7. Fahrzeugluftreifen nach einem der Ansprüche 1 bis 6, **dadurch gekennzeichnet, dass** der gegenseitige Abstand (a₁ bis aₙ) der Löcher (14) innerhalb einer Lochreihe (15) zumindest 2 mm beträgt

8. Fahrzeugluftreifen nach Anspruch 6 oder 7, **dadurch gekennzeichnet, dass** die Lochabstände (a₁ bis aₙ) zwischen den Löchern (14) einer Lochreihe (15), insbesondere in Richtung zum benachbarten Laufstreifenrand (s), schrittweise größer sind.

9. Fahrzeugluftreifen nach einem der Ansprüche 6 bis 8, **dadurch gekennzeichnet, dass** der Lochabstand von Loch (14) zu Loch (14) jeweils um einen Faktor (F2), welcher zwischen 1,05 und 1,50 beträgt, größer ist.

10. Fahrzeugluftreifen nach einem der Ansprüche 1 bis 9, **dadurch gekennzeichnet, dass** bei kreisrund ausgeführten Löchern (14) das Verhältnis des Lochdurchmessers zur Lochtiefe für jedes Loch (14) innerhalb einer Lochreihe (15) zwischen 2 und 5 beträgt.

11. Fahrzeugluftreifen nach einem der Ansprüche 1 bis 10, **dadurch gekennzeichnet, dass** bei kreisrund ausgeführten Löchern (14) das Verhältnis des Lochdurchmessers zur Lochtiefe für jedes Loch (14) innerhalb einer Lochreihe (15) zumindest im Wesentlichen konstant ist.

12. Fahrzeugluftreifen nach einem der Ansprüche 1 bis 11, **dadurch gekennzeichnet, dass** der zwischen zwei Lochreihen (15) verlaufende Einschnitt (11) zumindest über einen Teil seiner Erstreckung einen treppen-, wellen- oder zick-zack-förmigen Verlauf aufweist.

13. Fahrzeugluftreifen nach Anspruch 12, **dadurch gekennzeichnet, dass** in schulterseitigen Blockreihen (4) der bzw. die Einschnitt(e) (11) aus einem Einschnittteil (11a) mit einem treppenförmigen Verlauf und einem Einschnittteil (11b) mit einem wellenförmigen Verlauf besteht bzw. bestehen.

## Claims

1. Pneumatic vehicle tyre with a tread rubber, which is divided into tread elements, in particular tread bars (5, 8), by circumferential grooves (1, 3), running around in the circumferential direction, and by transverse grooves (6, 9), tread bars (8) which have rows of holes (15) running parallel to one another and at least substantially in the transverse direction of the tread being provided, with two or three uniformly distributed rows of holes (15) being provided for each tread bar (8), **characterized in that** the holes (14) within a row of holes (15) have varying hole areas.

2. Pneumatic vehicle tyre according to Claim 1, **characterized in that**, in the middle region of the tread bar (9), arranged between two adjacent rows of holes (15) is a sipe (11) running in the direction of extent of the rows of holes (15).

3. Pneumatic vehicle tyre according to Claim 1, **characterized in that** the holes (14) within a row of holes (15) have hole areas of 1.9 mm² to 14 mm², preferably from 3.8 mm² to 6.3 mm².

4. Pneumatic vehicle tyre according to Claim 1 or 3, **characterized in that** at least some of the holes (14) in a row of holes (15) have a hole area that becomes progressively larger.

5. Pneumatic vehicle tyre according to one of Claims 1 to 4, **characterized in that** the hole areas become larger from hole (14) to hole (14) by a factor (F1) that is between 0.5 and 2.0.

6. Pneumatic vehicle tyre according to one of Claims 1 to 5, **characterized in that** the hole spacings (a₁ to aₙ) between the holes (14) of a row of holes (15) vary.

7. Pneumatic vehicle tyre according to one of Claims 1 to 6, **characterized in that** the mutual spacing (a₁ to aₙ) of the holes (14) within a row of holes (15) is at least 2 mm.

8. Pneumatic vehicle tyre according to Claim 6 or 7, **characterized in that** the hole spacings (a₁ to aₙ) between the holes (14) of a row of holes (15) are progressively greater, particularly in the direction of the adjacent periphery (s) of the tread rubber.

9. Pneumatic vehicle tyre according to one of Claims 6 to 8, **characterized in that** the hole spacing from hole (14) to hole (14) is greater in each case by a factor (F2) that is between 1.05 and 1.50.

10. Pneumatic vehicle tyre according to one of Claims 1 to 9, **characterized in that**, in the case of holes (14) of a circular configuration, the ratio of the hole diameter to the hole depth for each hole (14) within a row of holes (15) is between 2 and 5.

11. Pneumatic vehicle tyre according to one of Claims 1 to 10, **characterized in that**, in the case of holes (14) of a circular configuration, the ratio of the hole diameter to the hole depth for each hole (14) within a row of holes (15) is at least substantially constant.

12. Pneumatic vehicle tyre according to one of Claims 1 to 11, **characterized in that** the sipe (11) running between two rows of holes (15) follows a stair-, wave- or zigzag-shaped path, at least over part of its extent.

13. Pneumatic vehicle tyre according to Claim 12, **characterized in that**, in rows of bars (4) at the shoulders, the sipe or sipes (11) consists or consist of a sipe part (11a) following a stair-shaped path and a sipe part (11b following a wave-shaped path.

## Revendications

1. Bandage pneumatique pour roue de véhicule, qui présente une bande de roulement divisée en éléments profilés et en particulier en blocs profilés (5, 8) par des rainures périphériques (1, 3) qui s'étendent dans la direction périphérique et par des rainures transversales (6, 9), des blocs profilés (8) qui présentent des rangées (15) de trous parallèles les unes aux autres et s'étendant au moins essentiellement dans la direction transversale du profil étant prévus,
deux ou trois rangées (15) de trous uniformément réparties étant prévues sur chaque bloc profilé (8), **caractérisé en ce que**
la surface des trous (14) varie à l'intérieur d'une rangée (15) de trous.

2. Bandage pneumatique pour roue de véhicule selon la revendication 1, **caractérisé en ce qu'**une entaille (11) qui s'étend dans la direction d'extension des rangées (15) de trous entre deux rangées (15) de trous voisines est disposée dans la partie centrale du bloc profilé (9).

3. Bandage pneumatique pour roue de véhicule selon la revendication 1, **caractérisé en ce qu'**à l'intérieur d'une rangée (15) de trous, la surface des trous (14) est comprise entre 1,9 mm² et 14 mm² et de préférence entre 3,8 mm² et 6,3 mm² .

4. Bandage pneumatique pour roue de véhicule selon les revendications 1 ou 3, **caractérisé en ce que** la surface d'au moins une partie des trous (14) d'une rangée (15) de trous augmente par pas.

5. Bandage pneumatique pour roue de véhicule selon l'une des revendications 1 à 4, **caractérisé en ce que** la surface des trous augmente d'un trou (14) à un autre trou (14) d'un facteur (F1) compris entre 0,5 et 2,0.

6. Bandage pneumatique pour roue de véhicule selon l'une des revendications 1 à 5, **caractérisé en ce que** les distances (a₁ à aₙ) entre les trous (14) d'une rangée (15) de trous varient.

7. Bandage pneumatique pour roue de véhicule selon l'une des revendications 1 à 6, **caractérisé en ce que** la distance mutuelle (a₁ à aₙ) entre les trous (14) d'une rangée (15) de trous est d'au moins 2 mm.

8. Bandage pneumatique pour roue de véhicule selon les revendications 6 ou 7, **caractérisé en ce que** les distances (a₁ à aₙ) entre les trous (14) d'une rangée (15) de trous augmentent par pas en particulier en direction du bord voisin (s) de la bande de roulement.

9. Bandage pneumatique pour roue de véhicule selon l'une des revendications 6 à 8, **caractérisé en ce que** la distance d'un trou (14) à un autre trou (14) augmente d'un facteur (F2) compris entre 1,05 et 1,50.

10. Bandage pneumatique pour roue de véhicule selon l'une des revendications 1 à 9, **caractérisé en ce que** lorsque les trous (14) sont circulaires, le rapport entre le diamètre et la profondeur de chaque trou (14) d'une rangée (15) de trous est compris entre 2 et 5.

11. Bandage pneumatique pour roue de véhicule selon l'une des revendications 1 à 10, **caractérisé en ce que** lorsque les trous (14) sont circulaires, le rapport entre le diamètre et la profondeur de chaque trou (14) dans une rangée (15) de trous est essentiellement constant.

12. Bandage pneumatique pour roue de véhicule selon l'une des revendications 1 à 11, **caractérisé en ce que** sur au moins une partie de son extension, l'entaille (11) qui s'étend entre deux rangées (15) de trous présente une évolution en escalier, en ondulations ou en zigzag.

13. Bandage pneumatique pour roue de véhicule selon la revendication 12, **caractérisé en ce que** dans la rangée (4) de blocs situés du côté de l'épaulement, la ou les entailles (11) sont constituées d'une partie (11a) d'entaille qui évolue en escalier et une partie (11b) d'entaille qui évolue en ondulations.
